Europäisches Patentamt

European Patent Office

Office européen des brevets

(11) Veröffentlichungsnummer: **0 318 784 B1**

# EUROPÄISCHE PATENTSCHRIFT

(45) Veröffentlichungstag der Patentschrift: 29.06.94

(51) Int. Cl.⁵: **C08G 65/26**, C08G 18/48

(21) Anmeldenummer: 88119295.9

(22) Anmeldetag: 21.11.88

(54) **Verfahren zur Herstellung von Polyetherpolyolen auf Basis o-Toluylendiamin, und ihre Verwendung für Polyurethan- und Polyisocyanurat-Kunststoff.**

(30) Priorität: 01.12.87 DE 3740634

(43) Veröffentlichungstag der Anmeldung:
07.06.89 Patentblatt 89/23

(45) Bekanntmachung des Hinweises auf die
Patenterteilung:
29.06.94 Patentblatt 94/26

(84) Benannte Vertragsstaaten:
AT BE CH DE ES FR GB IT LI NL SE

(56) Entgegenhaltungen:
EP-A- 0 001 800
EP-A- 0 256 252
DE-A- 2 017 038
GB-A- 972 772
US-A- 4 243 759

(73) Patentinhaber: BAYER AG

D-51368 Leverkusen(DE)

(72) Erfinder: **Dietrich, Manfred, Dr.**
**Dresdener Strasse 16**
**D-5090 Leverkusen 1(DE)**
Erfinder: **Kaufung, Reinhard, Dr.**
**Heymannstrasse 34**
**D-5090 Leverkusen 1(DE)**

**Beschreibung**

Die vorliegende Erfindung betrifft ein Verfahren zur Herstellung von verbesserten basischen Polyetherpolyolen sowie die Verwendung der Polyetherpolyole zur Herstellung von Polyurethan- und Polyisocyanurat-Kunststoffen.

Alkylenoxidaddukte von Toluylendiaminen, im folgenden TDA genannt, insbesondere von 2,4- und 2,6-TDA und von Gemischen daraus, und deren Verwendung zur Herstellung von Polyurethanen ist schon lange bekannt (GB-PS 972 772). In der deutschen Offenlegungsschrift 2 017 038 werden auch Polyether auf Basis von o-TDA und deren Verwendung zur Herstellung von Polyurethanen beansprucht. Bei diesen Polyethern reagieren sämtliche aminischen Protonen des o-TDA mit Epoxiden.

TDA wird in großen Mengen als Ausgangsprodukt zur Herstellung von Toluylendiisocyanat (TDI) produziert. Durch die gute Zugänglichkeit war es von Anfang an attraktiv, das rohe TDA, welches neben den 2,4- und 2,6-Isomeren auch geringe Mengen o-Anteile enthält, als Starter für Hartschaumpolyether einzusetzen. Seit einigen Jahren ist es bei der TDA-Fabrikation üblich, dieses rohe TDA durch Destillation zu reinigen, wobei das o-TDA - ein Gemisch aus 2,3- und 3,4-TDA - als Nebenprodukt anfällt. Dieses preiswerte Zwangsanfallprodukt wird jetzt vermehrt als Starter für basische Polyether eingesetzt.

In den letzten zehn Jahren wurden die Arbeiten auf dem Gebiet intensiviert, da sich herausstellte (US-PS 4 209 609 = EP-A 0 001 800), daß Polyurethan-Hartschaumstoffe auf Basis von TDA-Polyethern gegenüber herkömmlichen Polyurethan-Hartschaumstoffen einige gravierende Vorteile aufweisen, wenn sie im OH-Zahl-Bereich 400 bis 630 liegen, und in der Weise hergestellt werden, daß TDA zunächst mit etwa 4 Mol Ethylenoxid und anschließend mit Propylenoxid umgesetzt wird, d.h. neben einer hohen OH-Zahl und einem Mindestanteil an Ethylenoxid müssen alle Endgruppen sekundär sein. Als Vorteile sind insbesonders zu nennen eine extrem niedrige Wärmeleitzahl, eine günstige Flammwidrigkeit und gute Zähigkeit.

Reine Propylenoxidpolyether, nach üblichen Verfahren hergestellt, sind in dem genannten OH-Zahl-Bereich extrem hochviskos (>50.000 mPa.s/25°C) und liefern nur Hartschaumstoffe mit dem üblichen Eigenschaftsniveau. Das letztere gilt auch für relativ niedrigviskose reine Propylenoxidpolyether, wie sie nach US-PS 4 391 728 in Gegenwart von mindestens 0,8 % Alkalimetallhydroxid bei hohen Temperaturen hergestellt werden.

Reine Ethylenoxidpolyether wiederum sind aufgrund der primären OH-Gruppen für die meisten Hartschaumanwendungen zu aktiv.

Die gut geeigneten Polyether, die die schon erwähnten Anforderungen, nämlich pro Mol TDA etwa 4 Mol Ethylenoxid und dann Propylenoxid, erfüllen, sind in der Patentschrift US-PS 4 209 609 beschrieben. Nach dieser Patentschrift wird der Alkoxylierungskatalysator vorzugsweise nach der Ethylenoxidstufe zugegeben. Setzt man allerdings vor der Zugabe des Ethylenoxids einen der erwähnten aminischen Katalysatoren wie Triethylamin oder Pyridin (siehe Vergleichsbeispiele c und h aus Tabelle 1) ein, so erhält man sehr hochviskose Produkte mit ausschließlich tertiären Aminogruppen. Im Falle des direkten Einsatzes von KOH (Vergleichsbeispiel d aus Tabelle 1) resultieren sehr niedrigviskose, jedoch nicht reproduzierbar herstellbare Produkte, wie auch schon in der Offenlegungsschrift 2 017 038 S. 5, Zeile 17, festgestellt wurde, die zudem noch sehr hohe Gehalte an freiem o-TDA (1 bis 2 Gew.-%) aufweisen.

Die Herstellung niedrigviskoser Polyether auf Basis o-TDA im OH-Zahl-Bereich 300 bis 500 nach einem Zweistufenverfahren wird in US-PS 4 562 290 beschrieben. Hierbei wird in der ersten Stufe 1 bis 3 Mol Ethylenoxid pro Mol o-TDA bei 125°C und dann nach Zugabe von KOH als Katalysator Propylenoxid bei mindestens 140°C zudosiert.

Die nach US-PS 4 209 609 herstellbaren Polyether auf Basis o-TDA sind nur beschränkt einsetzbar. Insbesondere Hartschaumplatten mit Dicken über 10 cm, die auf üblichen Doppeltransportband-Anlagen hergestellt und die zunehmend in den Bauordnungen vieler Länder verlangt werden, können mit diesen Materialien nicht gefertigt werden. Sie liefern zwar, wie schon oben erwähnt, Schaumstoffe mit niedrigen Wärmeleitzahlen, guten Flammwidrigkeiten und Zähigkeiten bei gutem Fließverhalten, neigen jedoch zur starken Rißbildung und Kernverfärbung, insbesondere bei großen Schichtdicken.

Es wurde nun überraschenderweise gefunden, daß man TDA-Polyether mit hervorragenden Verschäumungseigenschaften ohne die genannten Nachteile, nämlich Rißbildung und Kernverfärbung, bei hohen Schichtdicken herstellen kann, die die gewünschten Eigenschaftsverbesserungen in Bezug auf gute Flammwidrigkeit, gute Zähigkeit und insbesondere gegenüber dem Stand der Technik eine noch weiter erniedrigte Wärmeleitzahl ergeben, wenn man als TDA ausschließlich o-TDA einsetzt und die Alkoxylierung mit zunächst Ethylenoxid und anschließend Propylenoxid von vornherein in Gegenwart von im folgenden näher erläuterten speziellen aminischen Katalysatoren durchführt.

Gegenstand der vorliegenden Erfindung ist somit ein Verfahren zur Herstellung von Polyetherpolyole einer OH-Zahl von 400 bis 630 auf Basis o- Toluylendiamin, bei denen 5 bis 20 % der gegenüber Isocyanaten reaktiven Gruppen aus sekundären Aminogruppen bestehen und deren Gehalt an freiem o-Toluylendiamin unter 0,2 Gew.-% liegt, das dadurch gekennzeichnet ist, daß o-Toluylendiamin bei Temperaturen von 90 bis 125°C zunächst mit 2 bis 5 Molen, vorzugsweise 3,1 bis 4 Molen, Ethylenoxid in Anwesenheit von 0,05 bis 1 Gew.-% eines aminischen Schaumkatalysatars und/oder eines Amines aus der Reihe N-Methylimidazol, Benzyltrimethylammoniumhydroxid und Homologe, 2-Dialkylaminoethanol mit Alkylgruppen von $C_1$ bis $C_4$, und dann mit 1 bis 5 Molen, vorzugsweise 1 bis 4,1 Malen, Propylenoxid umgesetzt wird, wobei die Gesamtmenge an Alkylenoxid 5,0 bis 8,1 Mole pro Mol o- Toluylendiamin beträgt.

Ein weiterer Gegenstand der Erfindung ist ein Verfahren zur Herstellung von Polyurethan-Kunststoffen, vorzugsweise PU-Schaumstaffen einschließlich Polyisocyanurat-Schaumstoffen, welche insbesondere flammwidrige Eigenschaften aufweisen, dadurch gekennzeichnet, daß man die erfindungsgemäß hergestellten Polyether auf Basis o-TDA, gegebenenfalls unter Zumischung anderer Polyether- oder Polyesterpolyole und einbaufähiger oder nicht einbaufähiger Flammschutzmittel, bei der üblichen Herstellung von PU-Schaumstoffen nach dem Polyisocyanat-Polyadditionsverfahren verwendet.

Bei der erfindungsgemäßen Herstellungsweise wird ein erheblicher Teil der Aminogruppen (10 bis 40 Mol-%) nur monoalkoxyliert, so daß im Endprodukt 5 bis 20 % der gegenüber Isocyanaten reaktiven Gruppen als sekundäre Aminogruppen übrigbleiben. Hierdurch ist die Erniedrigung der Viskosität gegenüber den Produkten des Standes der Technik, bei denen alle Aminogruppen durchalkoxyliert sind, zu erklären.

Der Gehalt an sekundären Aminogruppen in den erfindungsgemäßen Polyethern kann aus der Differenz der OH-Zahlen ermittelt werden, die nach der Essigsäureanhydrid- bzw. der Phthalsäureanhydrid-Methode bestimmt werden. Mit der Essigsäureanhydrid-Methode wird, wie Modellversuche gezeigt haben, die Summe der OH- und NH-Gruppen erfaßt, nach der Phthalsäureanhydrid-Methode werden nur die OH-Gruppen acyliert.

Eine weitere Folge der vorhandenen sekundären Aminogruppen ist die Erniedrigung des Gehaltes an tertiären Aminogruppen, welche bei hohen Schaumtemperaturen, die entweder bei der Verschäumung zu hohen Schichtdicken oder zu hohen Rohdichten auftreten, Nebenreaktionen katalysieren und so Ursache für Rißbildung und Kernverfärbung sind.

Überraschenderweise enthalten die erfindungsgemäßen Polyether trotz der nur partiellen Alkoxylierung der Aminogruppen weniger als 0,2 %, in den meisten Fällen sogar unter 0,1 % freies o-TDA.

Weitere Vorteile des erfindungsgemäßen Verfahrens sind 1. die Einsparung eines Neutralisationsschrittes und die Entsorgung von Alkalisalzen und 2. wegen der verhältnismäßig niedrigen Reaktionstemperaturen Vermeidung von Epoxidnebenreaktionen wie Aldehyd, Dioxan und Dioxolan-Bildung und damit Abluftproblemen und auch schließlich Verfärbungen.

Ein weiterer Vorteil der erfindungsgemäßen Polyether ist die durch die enthaltenen reaktiven sekundären Aminogruppen erhöhte Anfangsaktivität des Schaumgemisches, die zu Einsparungsmöglichkeiten an Katalysatoren führt.

Selbstverständlich lassen sich bei der Herstellung der erfindungsgemäßen Polyether auf Basis o-TDA auch bis zu 50 Mol -% an Coinitiatoren wie Glycerin, Trimethylolpropan, Pentaerythrit, Sorbit, Sucrose, auch Diole wie Ethylenglykol, Diethylglykol und Propylenglykol, ferner Ammoniak, aliphat. Amine und Alkanolamine mitverwenden.

Das Verfahren wird im allgemeinen wie folgt ausgeführt.

o-TDA wird zusammen mit dem Katalysator (0,15 bis 4,6 Gew.-%, bezogen auf o-TDA) vorgelegt. Als Katalysatoren sind handelsübliche aminische Polyurethanschaumkatalysatoren wie N,N' -Dimethylbenzylamin, N,N' -Dimethylcyclohexylamin, Pentamethyldiethylentriamin, 2,2'-Bis-(dimethylamino)-diethylether, N-Methyl-N'-(dimethylaminoethyl)piperazin sowie Amine aus der Reihe N-Methylimidazol, Benzyltrimethylammoniumhydroxid und Homologe. 2-Dialkylaminoethanol mit Alkylgruppen von $C_1$ bis $C_4$ einsetzbar (vgl. auch DE-OS 2 624 527, DE 2 624 528, DE-OS 2 636 787, DE-OS 1 720 633, US-PS 3 330 782, DE-AS 1 030 558, DE-OS 1 804 361, DE-OS 2 618 280).

Bei 90 bis 125°C wird im Verlauf von 2 bis 6 Stunden zunächst die 2- bis 5-fache molare Menge an Ethylenoxid zudosiert und nach einer Nachreaktionszeit von ca. 2 Stunden die für die gewünschte OH-Zahl von 400 bis 630 erforderliche Menge an Propylenoxid. Nach weiteren 5 Stunden bei 125°C ist Alkylenoxid nur in Spuren nachweisbar, die im Vakuum entfernt werden. Ein weiterer Aufarbeitungsschritt ist danach nicht mehr nötig.

Die erfindungsgemäßen Produkte eignen sich in hervorragender Weise als Ausgangsprodukte für Polyurethan-Kunststoffe, bei denen üblicherweise Polyhydroxylverbindungen mit hohen OH-Zahlen eingesetzt werden, z.B. Beschichtungen, Verklebungen, Duromere, Sandwichwerkstoffe usw. Haupteinsatzgebiet sind jedoch Polyurethan-Hartschaumstoffe mit unterschiedlichen Polyisocyanuratgehalten.

Zur Herstellung von Polyurethanen, vorzugsweise Polyurethanhartschaumstoffen, werden neben den erfindungsgemäßen Polyethern eingesetzt:

Polyisocyanate:

Aliphatische, cycloaliphatische, araliphatische, heterocyclische und besonders aromatische Di- und/oder Polyisocyanate, wie sie z.B. von W.Siefken in Justus Liebigs Annalen der Chemie, 562, Seiten 75 bis 136, beschrieben werden, beispielsweise solche der Formel (Q(NCO)$_n$, in der n = 2 bis 4, vorzugsweise 2 und Q einen aliphatischen Kohlenwasserstoffrest mit 2 bis 18, vorzugsweise 6 bis 12 C-Atomen, einen cycloaliphatischen Kohlenwasserstoffrest mit 4 bis 20, vorzugsweise 5 bis 11 C-Atomen, einen aromatischen Kohlenwasserstoffrest mit 6 bis 20, vorzugsweise 6 bis 13 C-Atomen, oder einen araliphatischen Kohlenwasserstoffrest mit 8 bis 15, vorzugsweise 8 bis 13 C-Atomen bedeuten, z.B. solche Polyisocyanate wie sie in der DE-A 2 832 253, Seiten 10 bis 11, beschrieben werden. Besonders bevorzugt werden die technisch leicht zugänglichen Polyisocyanate, z.B. das 2,4- und/oder 2,6-Toluylendiisocyanat sowie beliebige Gemische dieser Isomeren ("TDI") , Diphenylmethandiisocyanate (4,4' - und/oder 2,4'-, und/oder 2,2'-Isomere), Polyphenyl-polymethylen-polyisocyanate, wie sie durch Anilin-Formaldehyd-Kondensation und anschließende Phosgenierung hergestellt werden ("rohes MDI") und "modifizierte Polyisocyanate", die z.B. Carbodiimidgruppen, Urethangruppen, Allophanatgruppen, Isocyanuratgruppen, Harnstoffgruppen und/oder Biuretgruppen aufweisen; insbesondere solche modifizierten Polyisocyanate, die sich vom 2,4- und/oder 2,6-Toluylendiisocyanat und bevorzugt vom 4,4'- und/oder 2,4'-Diphenylmethandiisocyanat ableiten. Werden nur zweifunktionelle höhermolekulare Verbindungen und gegebenenfalls nur zweifunktionelle, weitere niedermolekulare Kettenverlängerungsmittel verwendet, so setzt man bevorzugt modifizierte Polyisocyanate mit einer Funktionalität von mehr als 2,0 ein bzw. verwendet tri- und/oder höherfunktionelle Polyisocyanate.

Ferner werden gegebenenfalls als Ausgangsmaterialien zur Polyurethan-Herstellung sogenannte Kettenverlängerungsmittel oder Vernetzer, d.h. Verbindungen mit mindestens zwei gegenüber Isocyanaten reaktionsfähigen Wasserstoffatomen und einem Molekulargewicht von 18 bis 399 mitverwendet. Auch in diesem Fall versteht man hierunter vorzugsweise Hydroxylgruppen und/oder Aminogruppen und/oder Thiolgruppen und/oder Carboxylgruppen und/oder Hydrazidgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele werden hierfür in der DE-A 2 832 253, Seiten 19-20, beschrieben. Genannt seien Wasser, Triethanolamin, Ethylenglykol, Diethylenglykol, Trimethylolpropan, Formit-Gemische oder Glycerin.

In Mengen bis ca. 90 Gew.-%, bezogen auf die erfindungsgemäßen Polyether, können als höhermolekulare Co-Polyolkomponente Verbindungen mit mindestens zwei gegenüber Isocyanaten reaktionsfähigen Wasserstofatomen von einem Molekulargewicht in der Regel von 200 bis 1 500 mitverwendet werden. Hierunter versteht man insbesondere 2 bis 8 Hydroxylgruppen aufweisende Polyester und/oder Polyether, wie sie für die Herstellung von homogenen und zellförmigen Polyurethanen bekannt sind und wie sie z.B. in der DE-A 2 832 253, Seiten 11 bis 18, beschrieben werden. Als Polyether sind solche bevorzugt, die durch Addition von einem oder mehreren Alkylenoxiden (Ethylenoxid und besonders Propylenoxid) an zwei- oder mehrwertige "Starter" (Propylenglykol, Glycerin, Sorbit, Formose, Saccharose, Triethanolamin, Trimethylolpropan) erhalten werden.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophtalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglylkol- (1,4) und - (2,3), Hexandiol - (1,6) , Octandiol-(1,8) , Neopentylgkylol, 1,4-Bishydroxymethylcyclohexan, 2-Methyl- 1,3-propandiol, Glycerin, Trimethylolpropan, Hexantrion-(1,2,6), Butantriol- (1,2,4), Trimethylolethan, Pentaerythrit, Chinit, Mannit und Sorbit, Formit, Methylglykosid, ferner Diethylenglykol , Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. $\epsilon$-Caprolacton, oder aus Hydroxycarbonsäuren, z.B. $\omega$-Hydroxycapronsäure, sind einsetzbar.

Gegebenenfalls werden Hilfs- und Zusatzmittel, wie leichtflüchtige anorganische, jedoch bevorzugt organische Substanzen als Treibmittel, Katalysatoren der an sich bekannten Art, wie tert. Amine, Zinn(II)- und Zinn(IV)-Verbindungen, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine, Fettalkohole oder Dimethylpolysiloxane sowie Flammschutzmittel, Pigmente oder Farbstoffe der an sich bekannten Art, ferner Stabilisatoren gegen Alterungs-, Licht- und Witterungseinflüsse, Weichmacher und fungistatisch und bakteriostatisch wirkende Substanzen, sowie Füllstoffe zugesetzt. Diese gegebenenfalls mitzuverwendenden Hilfs-und Zusatzstoffe werden beispielsweise in der DE-A 2 732 292, Seiten 21 bis 24, ausführlich beschrieben. Weitere Beispiele der Hilfs- und Zusatzmittel werden im Kunststoffhandbuch, Band VII, herausgegeben von Vieweg und Höchtlen, Carl-Hanser-Verlag, München 1966, auf den Seiten 103 bis 113, sowie im Kunststoffhandbuch, Band VII, herausgegebenen von Becker und Braun, Carl-Hanser-Verlag, München 1983, auf den Seiten 92 bis 111, beschrieben.

Mit den erfindungsgemäßen Polyethern hergestellte Hartschaumstoffe finden Verwendung als Dämmplatten, als Sandwich-Elemente mit verschiedenen Deckschichten, als Ortschaumstoffe wie Spritzschaumstoffe oder nach dem Überschichtungsverfahren hergestellten Schaumstoffe, als Sonnenkollektorfüllungen, als Rohrisolierung, als Füll- und Montageschaumstoffe und Blockschaumstoffe.

Ihre Herstellung erfolgt nach üblichen kontinuierlichen oder diskontinuierlichen Verfahren der Polyurethanverarbeitung wie z.B. der Doppelbandtechnik, Spritz- oder Gießverfahren, mit Hoch- oder Niederdruck-Verschäumungsmaschinen, wobei ihre relativ niedrigen Viskositäten Vorteile, insbesondere bei der maschinellen Verarbeitung, bieten.

Das erfindungsgemäße Verfahren wird durch die folgenden Beispiele näher erläutert.

Beispiele 1 bis 14 und Vergleichsbeispiele a bis i.

Allgemeine Herstellungsvorschrift

In einen für Umsetzungen mit Alkylenoxiden geeigneten Reaktor wird unter Rühren in einer Stickstoffatmosphäre das o-Toluylendiamin und der Katalysator vorgelegt und bei 90 bis 125 °C das Ethylenoxid unter einem Stickstoffdruck von 1 bis 3 bar zudosiert. Nach beendeter Zugabe des Ethylenoxids erfolgt nach einer Nachreaktion von 1 bis 2 h die allmähliche Zugabe des Propylenoxids bei obiger Temperatur, gefolgt von einer weiteren Nachreaktion von ca. 5 h. Danach werden evtl . Spuren von freiem Alkylenoxid destillativ unter vermindertem Druck entfernt und nach Zugabe von ca. 0,1 Gew.-% Jonol wird der Inhalt des Reaktors abgelassen.

In der folgenden Tabelle 1 sind als Beispiele 14 Rezepturen, die resultierenden erfindungsgemäßen Polyetherpolyole und 9 Vergleichsbeispiele gegenübergestellt. Die darin verwendeten Abkürzungen haben folgende Bedeutung:

EO     Ethylenoxid: Angegeben in Mole/Mol o-Toluylendiamin

PO     Propylenoxid angegeben in Mole/Mol o-Toluylendiamin

Katalysatoren:

  1       : N-Methylimidazol

  2       : Benzyltrimethylammoniumhydroxid als 40 %ige wäßr. oder methanol. Lösung

  3       : 2-Dimethylaminoethanol

  4       : 2-Dibutylaminoethanol

  5       : N,N' -Dimethylbenzylamin

  6       : N,N' -Dimethylcyclohexylamin

  7       : Pentamethyldiethylentriamin

  8       : 2,2'-Bis-(dimethylamino)-diethylether

  9       : N-Methyl-N'-(dimethylaminoethyl)piperazin

 10      : KOH

 11      : Triethylamin

 12      : Pyridin

Die Menge in Gew. -% der in der Tabelle angegebenen Katalysatoren bezieht sich auf dem Gesamtansatz.

Bei den Vergleichsbeispielen a, b, e, f, g und i wurde der Katalysator erst nach der Ethylenoxidstufe zugegeben.

Die mit Kalilauge katalysierten Polyetherpolyole wurden selbstverständlich nach beendeter Nachreaktion mit Schwefelsäure neutralisiert und bei der Aufarbeitung wurden die Salze abfiltriert.

Die angegebenen OH-Zahlen sind sowohl nach der Essigsäureanhydrid ($Ac_2O$)-Methode als auch nach der Phthalsäureanyhdrid (PSA)-Methode bestimmt worden. Die Differenz der Werte beider Methoden gibt den Gehalt an sekundären NH-Gruppen an.

Tabelle 1

| Beispiel | Katalysator | Gew.-% | Mol EO | Katalysator | Gew.-% | Mol PO | OH-Zahl ($Ac_2O$) | OH-Zahl (PSA) | $\eta_{25}^{\circ}$ (mPas) | o-TDA (Gew.-%) |
|---|---|---|---|---|---|---|---|---|---|---|
| 1 | 1 | 0,1 | 3,6 | | | 3,4 | 468 | 417 | 7980 | 0,03 |
| a | | | 3,6 | 1 | 0,1 | 3,4 | 469 | 465 | 19200 | 0,002 |
| b | | | 3,6 | 10 | 0,3 | 3,4 | 470 | 467 | 18500 | 0,003 |
| c | 11 | 0,5 | 3,6 | | | 3,4 | 472 | 468 | 43700 | 0,001 |
| d | 10 | 0,3 | 3,6 | | | 3,4 | 437 | 435 | 1770 | 2 |
| 2 | 5 | 0,3 | 4,0 | | | 3,1 | 468 | 420 | 6820 | 0,03 |
| 3 | 2 | 0,2 | 3,6 | | | 3,4 | 471 | 425 | 5400 | 0,03 |
| 4 | 3 | 0,2 | 3,6 | | | 3,4 | 470 | 416 | 5650 | 0,08 |
| e | | | 3,6 | 3 | 0,2 | 3,4 | 468 | 463 | 17820 | 0,002 |
| 5 | 1 | 0,15 | 3,6 | | | 2,6 | 520 | 457 | 9420 | 0,06 |
| f | | | 3,6 | 1 | 0,15 | 2,6 | 520 | 502 | 32890 | 0,01 |
| 6 | 8 | 0,2 | 3,6 | | | 2,6 | 519 | 449 | 5640 | 0,15 |
| 7 | 6 | 0,15 | 3,6 | | | 2,6 | 515 | 466 | 8900 | 0,08 |
| 8 | 1 | 0,1 | 2,0 | | | 3,54 | 540 | 479 | 40500 | 0,01 |
| 9 | 1 | 0,1 | 3,6 | | | 2,33 | 539 | 477 | 11500 | 0,05 |
| g | | | 3,6 | 1 | 0,1 | 2,33 | 538 | 525 | 28860 | 0,005 |
| h | 12 | 0,5 | 3,6 | | | 2,32 | 539 | 520 | 37740 | 0,002 |
| 10 | 3 | 0,3 | 4,0 | | | 2,03 | 540 | 470 | 4500 | 0,15 |
| 11 | 2 | 0,2 | 3,6 | | | 2,33 | 535 | 458 | 5200 | 0,18 |
| 12 | 4 | 0,5 | 3,6 | | | 2,33 | 538 | 451 | 3370 | 0,19 |
| 13 | 7 | 0,2 | 3,6 | | | 2,33 | 535 | 463 | 4300 | 0,18 |
| 14 | 9 | 0,2 | 3,6 | | | 2,33 | 538 | 480 | 8830 | 0,05 |
| i | | | 3,6 | 9 | 0,2 | 2,33 | 537 | 528 | 18750 | 0,002 |

Verwendungsbeispiele

In den nachfolgenden Tabellen sind unter Verwendung einiger erfindungsgemäßer Polyole beispielhaft Rezepturen zur Herstellung von Polyurethan-, Polyurethan/-harnstoff/-Hartschaumstoffe bzw. Polyisocyanurat-Strukturen enthaltenden Hartschaumstoffen wiedergegeben.

Ausgangsrohstoffe

Als Isocyanate wurden handelsübliche Polyphenyl-polymethylen-polyisocyanate, die durch Phosgenierung von Anilin-Formaldehyd-Kondensaten erhalten wurden und NCO-Gehalte von 31-Gew.-% aufweisen, verwendet (Desmodur 44V20 und Desmodur 44V70/Bayer AG).

In den Beispielen 15-19 wurden erfindungsgemäße und in den Vergleichsbeispielen k-n herkömmliche Polyether auf Basis o-TDA aus Tabelle 1 verwendet.

Beispiel 15

Harte Polyurethanschaumstoffe wurden aus den in den Beispielen 1-14 beschriebenen, erfindungsgemäßen Polyolen unter Verwendung der nachfolgenden Rezeptur hergestellt,

70 Gew.-% Polyolabmischung I[®]
30 Gew.-% o-TDA-EO-PO-Polyether
1,4 Gew.-% Dimethylcyclohexylamin
40 Gew.-% R 11
ca. 150 Gew.-% Desmodur 44 v 70[®]

Polyolabmischung I

15 Gew.-% Ethylendiamin-PO-Polyether, OH-Zahl: 630
9 Gew.-% Glycerin
9 Gew.-% Dimethyl-N',N'-bis-(hydroxypropyl)-aminomethylphosphonat
20 Gew.-% Dibrombutendiol-Epichlorhydrin-Polyether (OH-Zahl: 330; 32 % Br; 6,8 % Cl)
15 Gew,-% Tris-chlorethylphosphat
1,4 Gew.-% Stabilisator
0,6 Gew.-% Wasser
indem die erfindungsgemäßen o-TDA-EO-PO-Polyether mit der Polyolabmischung I, Aktivator und R11 innig miteinander vermischt und nach Zugabe der aufgeführten Isocyanatmenge noch 6-12 sec. verrührt und dann in eine offene Form gegossen wurden.

Es entstanden freie Schaumstoffe der Abmessung 30x30x30 cm$^3$ mit einer Rohdichte von 25-30 kg/m$^3$ deren Aushärtung nach einem manuellen Verfahren bestimmt wurde, weshalb die Ergebnisse nur relativ zueinander bewertet werden können.

Das Brandverhalten der Schaumstoffe wurde nach DIN 4102 geprüft.

Beispiel 16

Entsprechend Beispiel 15 wurden weiterhin Schaumstoffe der Rohdichte 42-46 kg/m$^3$ hergestellt, indem der R 11 Gehalt von ca. 40 Gew.-Teilen auf 15-17 Gew.-Teilen gesenkt wurde.

Die Schaumstoffe wurden 18-24 Stunden nach der Herstellung aufgeschnitten und die Verfärbung (Verbrennung) im Kern sowie die Rißbildung beurteilt.

Bei Verwendung der erfindungsgemäßen o-TDA-EO-PO-Polyether konnte in dem genannten Rohdichtebereich bei keinem Schaumstoff Rißbildung oder Kernverbrennung beobachtet werden (Tabelle 2).

Tabelle 2

| | A | B | C | D | E | F | G | H | I | K | L | M | N | O |
|---|---|---|---|---|---|---|---|---|---|---|---|---|---|---|
| verwendeter o-TDA-EO-PO-Polyether aus Beispiel | 1 | 2 | 3 | 4 | 5 | 6 | 7 | 8 | 9 | 10 | 11 | 12 | 13 | 14 |
| relative Aushärtung (nach Beispiel 15)* | 1,00 | 0,94 | 1,26 | 1,12 | 1,07 | 0,98 | 1,24 | 0,90 | 0,85 | 1,15 | 0,98 | 0,92 | 0,85 | 0,83 |
| Brandprüfung [DIN 4102] Flammenhöhe in mm nach Beispiel 15 | 133 | 127 | 130 | 138 | 147 | 135 | 133 | 147 | 130 | 140 | 130 | 137 | 125 | 123 |
| Rißbildung im Rohdichtebereich 42-46 kg/m³ (nach Beispiel 16) | nein | nein | nein | nein | nein | nein | nein | nein | nein | nein | nein | nein | nein | nein |
| Kernverfärbung im Rohdichtebereich 42-46 kg/m³ (nach Beispiel 16) | nein | nein | nein | nein | nein | nein | nein | nein | nein | nein | nein | nein | nein | nein |

* Eindrucktiefe eines belasteten Stempels in cm

Vergleichsbeispiel k

Zu Vergleichszwecken wurden mit den Polyolen aus den Vergleichsbeispielen a, e, f, g, i Schaumstoffe hergestellt (Verarbeitung entsprechend Beispiel 15 und 16). Im Gegensatz zu Schaumstoffen aus den beanspruchten o-TDA-EO-PO-Polyethern zeigten diese Kernverbrennung oder Rißbildung bzw. Kernverbrennung und Rißbildung.

Vergleichsbeispiel 1

Entsprechend Beispiel 16 hergestellte Schaumstoffe aus o-TDA-Polyethern, die in der Propylenoxidstufe mit Metallhydroxiden katalysiert wurden (Polyol aus Vergleichsbeispiel b) zeigen starke Kernverbrennung und Rißbildung.

Vergleichsbeispiel m

Vergleichsbeispiel m zeigt, daß nicht alle in der Ethylenoxidstufe eingesetzten aminischen Katalysatoren zu den beanspruchten o-TDA-Polyethertypen führen.

Verwendet man Triethylamin oder Pyridin als Katalysator so führt dies zu vergleichsweise hochviskosen o-TDA-EO-PO-Polyethern (Vergleichsbeispiele c, h). Nach Beispiel 16 aus diesen o-TDA-Polyethertypen hergestellte Schaumstoffe zeigen starke Kernverbrennungen.

**Tabelle 3**

| | k | | | | | l | m | |
|---|---|---|---|---|---|---|---|---|
| | A | B | C | D | E | F | G | H |
| bei der Schaumstoffherstellung verwendeter o-TDA-EO-PO-Polyether aus Vergleichsbeispiel | a | e | f | g | i | b | c | h |
| relative Aushärtung*) (nach Beispiel 15) | 1,57 | 1,06 | 0,92 | 0,85 | 0,75 | 1,14 | 1,07 | 0,90 |
| Brandprüfung [DIN 4102] Flammenhöhe in mm nach Beispiel 15 | 127 | 133 | 127 | 140 | 120 | 133 | 127 | 143 |
| Rißbildung im Rohdichtebereich 42-46 kg/m³ (nach Beispiel 16) | ja | ja | ja | ja | nein | ja | nein | nein |
| Kernverfärbung im Rohdichtebereich 42-46 kg/m³ ( nach Beispiel 16) | nein | nein | nein | nein | ja | ja | ja | ja |

*) Eindrucktiefe eines belasteten Stempels in cm

Beispiel 17

Die aus den beanspruchten o-TDA-EO-PO-Polyethertypen hergestellten Schaumstoffe zeigen auch dann hinsichtlich Kernverbrennung und Rißbildung verbesserte Eigenschaften, wenn die Formulierungen weniger Flammschutzmittel enthalten und die Schaumstoffe nicht mehr der B2-Klassifizierung genügen.

Stellvertretend für die beanspruchten o-TDA-EO-PO-Polyether wurden die Polyether aus den Beispielen 1, 12, 14, 9 verwendet und unter Zumischen der in Tabelle 4 aufgelisteten Zusatzpolyole-, Flammschutzmittel, Treibmittel, Aktivator, Stabilisator und MDI in der im Beispiel 15 und 16 beschriebenen Weise verschäumt.

Die aufgeschnittenen Schaumstoffe (Rohdichtebereich: ca. 46 kg/m³ ) zeigten keinerlei Rißbildung oder Kernverfärbung.

Vergleichsbeisiel n

Zu Vergleichzwecken wurden mit den Polyolen aus den Vergleichsbeispielen b, a, e, f entsprechend Beispiel 17 Schaumstoffe hergestellt. Im Gegensatz zu denen aus Beispiel 17 zeigten alle Kernverbrennungen. Die Typen b, a, e ergaben zusätzlich Risse in dem genannten Rohdichtebereich.

**Tabelle 4**

|  | 17 | | | | n | | | |
|---|---|---|---|---|---|---|---|---|
|  | A | B | C | D | E | F | G | H |
| Verwendeter O-TDA-EO-PO-Polyethertyp aus Beispiel | 1 | 12 | 14 | 9 | - | - | - | - |
| aus Vergleichsbeispiel | - | - | - | - | b | a | e | f |
| o-TDA-EO-PO-Polyether | 30 | ↑ | ↑ | ↑ | ↑ | ↑ | ↑ | ↑ |
| Zucker-Polyether OHZ:420 | 31 | ↑ | ↑ | ↑ | ↑ | ↑ | ↑ | ↑ |
| Vernetzer OHZ . 1250 | 12 | ↑ | ↑ | ↑ | ↑ | ↑ | ↑ | ↑ |
| Stabilisator | 1,2 | ↑ | ↑ | ↑ | ↑ | ↑ | ↑ | ↑ |
| Ethylendiamin PO-Polyether OHZ:630 | 15 | ↑ | ↑ | ↑ | ↑ | ↑ | ↑ | ↑ |
| Aktivator | 0,5 | ↑ | ↑ | ↑ | ↑ | ↑ | ↑ | ↑ |
| Wasser | 0,6 | ↑ | ↑ | ↑ | ↑ | ↑ | ↑ | ↑ |
| Tris-chlorethylphosphat | 12 | ↑ | ↑ | ↑ | ↑ | ↑ | ↑ | ↑ |
| R 11 | 16 | ↑ | ↑ | ↑ | ↑ | ↑ | ↑ | ↑ |
| Desmodur 44 V 70 ® | 150 | ↑ | ↑ | ↑ | ↑ | ↑ | ↑ | ↑ |
| Rißbildung im Rohdichtebereich 46 kg/m³ | nein | nein | nein | nein | ja | ja | ja | nein |
| Kernverfärbung im Rohdichtebereich von 46 kg/m³ | nein | nein | nein | nein | ja | ja | ja | ja |

Beispiel 18

In an sich bekannter Weise wurden auf einer handelsüblichen Doppeltransportband-Anlage (DTB-Anlage) durch maschinelles Vermischen der Komponenten Polyurethan-Hartschaumplatten hergestellt und bezüglich ihres Brandverhaltens und ihrer Wärmeleitfähigkeit geprüft sowie die Kernverbrennungen und

Rißbildung beurteilt.

Tabelle 5

Rezeptur

| | A | B | C | D | E | F |
|---|---|---|---|---|---|---|
| Polyol aus Beispiel 1 | 30 | – | – | – | – | – |
| Polyol aus Beispiel 9 | – | 30 | – | – | – | 30 |
| Polyol aus Vergleichs-beispiel b | – | – | 30 | – | 30 | – |
| Polyol aus Vergleichs-beispiel a | – | – | – | 30 | – | – |
| Polyolabmischung I (aus Beispiel 15) | 70 | | | | | |
| Dimethylcyclohexylamin | 0,4 | 0,45 | 0,5 | 0,4 | 1,0 | 0,7 |
| R 11 | 34 | 34 | 33 | 30 | 36 | 35 |
| Desmodur 44V20® | 153 | 158 | 153 | 153 | 150 | 150 |

**Tabelle 5** (Fortsetzung)

| | A | B | C | D | E | F |
|---|---|---|---|---|---|---|
| Startzeit/sek. | 8 | 9 | 9 | 9 | 7 | 7 |
| Abbindezeit/sek. | 45 | 44 | 45 | 45 | 25 | 25 |
| Plattenrohdichte (kg/m³) | 31 | 31,3 | 29,5 | 29,5 | 35,6 | 36,8 |
| Plattendicke (mm) | 120 | 120 | 120 | 120 | 40 | 40 |
| Druckfestigkeit in Schaumrichtung (MPa) | 0,14 | 0,12 | 0,14 | - | 0,18 | 0,22 |
| Wärmeleitfähigkeit (Flußmethode, 24°C) | 0,018 | 0,018 (30mm Platte herausgeschnitten) | 0,018 | - | 0,018 | 0,018 |
| Kernverbrennung | nein | nein | stark | mittel | - | - |
| Rißbildung" | nein | nein | ja | ja | - | - |
| Brandprüfung DIN 4102 | B2 | B2 | B2 | B2 | B2 | B2 |

Beispiel 19

Die Verwendung der erfindungsgemäßen Polyole zur Herstellung von Schaumstoffen mit einem höheren Anteil an Isocyanuratstrukturen kann z.B. entsprechend nachfolgen-der Rezeptur erfolgen:

1 Gew.-% Kaliumacetat

1,2 Gew.-% Dimethylcyclohexylamin

20 Gew.-% o-TDA-PE (z.B. aus Beispiel 1)

31 Gew.-% Zucker, Propylenglykol, Wasser-PO-Polyether; OHZ = 470

13 Gew.-% Ethylendiamin-PO-Polyether; OHZ = 630

23,8 Gew.-% Tris-chlorethylphosphat

7 Gew.-% Vernetzer; OHZ = 1230

3 Gew.-% Stabilisator

56 Gew.-% R 11

270 Gew.-% Desmodur 44V20®

| Reaktionszeiten | Rührzeit : | 10 sek |
|---|---|---|
| | Startzeit: | 12 sek |
| | Abbindezeit: | 48 sek |

| Schaumstoffrohdichte | 29 kg/m$^3$ |
|---|---|
| Brandprüfung (DIN 4102) | B2 |
| BVD-Test (Schweiz) | Klasse V/3 |

**Patentansprüche**

1. Verfahren zur Herstellung von Polyetherpolyolen einer OH-Zahl von 400 bis 630 auf Basis o-Toluylendiamin, bei denen 5 bis 20 % der gegenüber Isocyanaten reaktiven Gruppen aus sekundären Aminogruppen bestehen und deren Gehalt an freiem o-Toluylendiamin unter 0,2 Gew.-% liegt, dadurch gekennzeichnet, daß o- Toluylendiamin bei Temperaturen von 90 bis 125°C zunächst mit 2 bis 5 Molen Ethylenoxid in Anwesenheit von 0,05 bis 1 Gew.-% eines aminischen Schaumkatalysators und/oder eines Amines aus der Reihe N-Methylimidazol, Benzyltrimethylammoniumhydroxid und Homologe, 2-Dialkylaminoethanol mit Alkylgruppen von C$_1$ bis C$_4$ und dann mit 1 bis 5 Molen Propylenoxid umgesetzt wird, wobei die Gesamtmenge an Alkylenoxid 5,0 bis 8,1 Mol pro Mol o-Toluylendiamin beträgt.

2. Verfahren nach Anspruch 1, dadurch gekennzeichnet, daß 3,1 bis 4 Mole Ethylenoxid pro Mol o-Toluylendiamin eingesetzt werden,

3. Verfahren nach Anspruch 1 oder 2, dadurch gekennzeichnet, daß 1 bis 4,1 Mole Propylenoxid pro Mol o-Toluylendiamin eingesetzt werden,

4. Verwendung der Polyether erhältlich nach dem Verfahren gemäß einem der Ansprüche 1 bis 3 als Ausgangsprodukte zur Herstellung von Kunststoffen auf Polyisocyanatbasis, durch Umsetzung von organischen Polyisocyanaten mit höhermolekularen Verbindungen mit gegenüber NCO-reaktiven Gruppen mit reaktiven H- Atomen gegebenenfalls Wasser und/oder niedermolekularen Kettenverlängerungsmitteln und/oder Vernetzern in Gegenwart von üblichen Hilfs- und Zusatzstoffen, Katalysatoren einschließlich Trimerisierungskatalysatoren.

**Claims**

1. A process for the production of polyether polyols with an OH value of 400 to 630 based on o-tolylenediamine, in which 5 to 20% of the isocyanate-reactive groups consist of secondary amino groups and which have a free o-tolylenediamine content of less than 0.2% by weight, characterized in that o-tolylenediamine is reacted at temperatures of 90 to 125°C first with 2 to 5 moles of ethylene oxide in the presence of 0.05 to 1% by weight of an aminic foam catalyst and/or an amine from the series consisting of N-methyl imidazole, benzyl trimethyl ammonium hydroxide and homologs, 2-dialkylaminoethanol containing C$_{1-4}$ alkyl groups and then with 1 to 5 moles of propylene oxide, the

14

total quantity of alkylene oxide being 5.0 to 8.1 moles per mole of o-tolylenediamine.

2. A process as claimed in claim 1, characterized in that 3.1 to 4 moles of ethylene oxide are used per mole of o-tolylenediamine.

3. A process as claimed in claim 1 or 2, characterized in that 1 to 4.1 moles of propylene oxide are used per mole of o-tolylenediamine.

4. The use of the polyethers obtainable by the process claimed in any of claims 1 to 3 as starting products for the production of polyisocyanate-based plastics by reaction of organic polyisocyanates with relatively high molecular weight compounds containing NCO-reactive groups containing reactive hydrogen atoms, optionally water and/or low molecular weight chain-extending agents and/or crosslinking agents in the presence of typical auxiliaries and additives and catalysts, including trimerization catalysts.

**Revendications**

1. Procédé pour la préparation de polyétherpolyols ayant un indice OH de 400 à 630, à base de o-toluylènediamine, dans lesquels de 5 à 20% des groupes réactifs vis-à-vis d'isocyanates sont constitués par des groupes amino secondaires et dont la teneur en o-toluylènediamine libre se situe en dessous de 0,2% en poids, caractérisé en ce qu'on fait réagir de la o-toluylènediamine à des températures de 90 à 125°C d'abord avec de 2 à 5 moles d'oxyde d'éthylène en présence de 0,05 à 1% en poids d'un catalyseur aminique moussant et/ou d'une amine de la série du N-méthylimidazole, de l'hydroxyde de benzyltriméthylammonium et de ses homologues, du 2-dialkylaminoéthanol contenant des groupes alkyle en $C_1$-$C_4$, et ensuite avec de 1 à 5 moles d'oxyde de propylène, la quantité totale d'oxyde d'alkylène s'élevant de 5,0 à 8,1 moles par mole de o-toluylènediamine.

2. Procédé selon la revendication 1, caractérisé en ce qu'on met en oeuvre de 3,1 à 4 moles d'oxyde d'éthylène par mole de o-toluylènediamine.

3. Procédé selon la revendication 1 ou 2, caractérisé en ce qu'on met en oeuvre de 1 à 4,1 moles d'oxyde de propylène par mole de o-toluylènediamine.

4. Utilisation des polyéthers que l'on obtient conformément au procédé selon l'une des revendications 1 à 3, comme produits de départ pour la préparation de matières synthétiques à base de polyisocyanate, par mise en réaction de polyisocyanates organiques avec des composés à poids moléculaire plus élevé contenant des groupes réactifs vis-à-vis des fonctions NCO pourvus d'atomes d'hydrogène réactifs, éventuellement avec de l'eau et/ou des agents d'allongement de chaînes et/ou des agents de réticulation à poids moléculaires peu élevés en présence de substances auxiliaires et d'additifs habituels, de catalyseurs, y compris des catalyseurs de trimérisation.